# EUROPEAN PATENT SPECIFICATION

(11) **EP 0 726 875 B1**
(45) Date of publication and mention of the grant of the patent: **16.07.1997**
(21) Application number: 95900870.7
(22) Date of filing: 16.11.1994
(51) Int. Cl.: B67D 5/378, B01D 53/22

(54) **METHOD AND APPARATUS FOR REDUCING HYDROCARBON EMISSIONS FROM A FUEL STORAGE TANK**
VERFAHREN UND VORRICHTUNG ZUR VERMINDERUNG DER MENGE DER AUS KRAFTSTOFFLAGERTANKS ENTWEICHENDEN DÄMPFE
PROCEDE ET APPAREIL DE REDUCTION DES EMISSIONS D'HYDROCARBURE D'UN RESERVOIR DE CARBURANT

(30) Priority: 16.11.1993 US 153528
(43) Date of publication of application: 21.08.1996
(73) Proprietor: GILBARCO INC., Greensboro North Carolina 27420 (US)
(72) Inventor: NANAJI, Seifollah, S., Greensboro, NC 27409 (US); POPE, Kenneth, L., Walkertown, NC 27051 (US); SOBOTA, Richard, R., Kernersville, NC (US)
(74) Representative: Cockayne, Gillian
(86) International application number: PCT/GB94/02529
(87) International publication number: WO 95/13984

(56) References cited:
- WO-A-93/22031
- DE-A- 3 806 107
- DE-A- 3 824 400
- DE-A- 4 225 170
- DE-U- 8 702 074
- DE-U- 9 205 552

## Description

The present invention relates to a fuel dispensing system and a method for reducing the discharge of hydrocarbon pollutants from fuel storage tanks and, in particular, to a fuel storage tank pressure control system.

When fuel is added to a fuel reservoir, such as the petroleum tank of an automobile from a conventional gas dispenser apparatus such as the dispensing nozzle of a petroleum dispenser, petroleum vapour is displaced from the petroleum tank. If the vapour is not collected in some way, it will be released into the atmosphere. Due to the large number of automobile refuellings, such releases of fuel vapour constitute a significant hazard to the environment, particularly in heavily populated areas. Releases of these vapours, which are composed of volatile organic compounds (VOC's) such as hydrocarbons, are presently the subject of significant and increasing regulation.

In an effort to guard against the release of volatile organic compounds to the environment, several systems have been designed to collect the vapours displaced from automobile fuel tanks during refuelling. One such system called the "balance" system provides a rubber boot which surrounds the dispenser nozzle and forms a seal around an automobile fuel tank filler pipe. This system relies on the volumetric displacement of the vapour by the fluid transferred through the nozzle to the petroleum tank to force the vapour through the boot, through a connecting conduit, and back into a fuel storage tank. A bulky and cumbersome nozzle is required to effect the necessary seal at the filler pipe. If a perfect seal is not made, then vapour can leak to the atmosphere instead of being returned to the storage tank.

To mitigate the need for a cumbersome dispenser nozzle design and to increase the collection efficiency of the dispenser, systems have been designed wherein vapour collection at the nozzle is assisted by a vacuum pump. An example of such a system is disclosed in US Patent 5,040,577 to Pope, the disclosure of which is hereby incorporated by reference. A problem that can arise with a pump assisted system is that the pump can have a tendency to pressurize the fuel storage tank and associated piping. If the volume of vapour collected at the nozzle and conveyed into the fuel storage tank by the vapour pump is more than the volume of liquid fuel dispensed from the nozzle, the pressure in the fuel storage tank will be increased. In the current art of vapour pump assisted vapour recovery systems that use bootless nozzles, a ratio of vapour recovered versus product delivered greater than 1:1 is required to achieve desired recovery efficiency at the filler pipe.

Both pressurization and depressurization of the fuel storage tank can have detrimental effects. When a fuel storage tank has an internal pressure which is greater than the ambient pressure, there is an increased tendency for fuel and/or vapour to leak from gaps in the piping or the tank. Because many tanks are located underground, it is difficult both to detect leaks and to repair leaks. If the fuel storage tank becomes highly over-pressurized, there is a danger that the structural integrity of the tank may be threatened and even a danger of catastrophic breach of fuel containment. Additionally, over-pressurization of the fuel storage tank lessens the efficiency of the vacuum assist pump by creating a greater pressure differential between the nozzle and the fuel storage tank.

In order to solve the foregoing problems of over-pressurization, several devices and methods have been developed to vent fuel storage tanks. It will be understood that a large portion of gas vented from the fuel storage tank will consist of volatile organic compounds. Regulations exist and will likely be made more stringent which limit the amount of VOC's that may be expelled into the atmosphere by such vents. Several techniques have been developed to meet these regulations. One such technique is disclosed in US Patent No. 4,118,170 to Hirt. The invention of Hirt involves burning the vapour vented. The danger of this technique is obvious, and the technique is presently not allowed in many areas. An alternate technique is to cool the vapour and return the condensed vapour to the tank as liquid. This technique is relatively expensive as it requires a refrigeration device.

International patent application, publication number WO 9322031 discloses an alternative system which attempts to solve the above problems. Here a gas separation diaphragm is positioned in the vapour recovery line of a dispenser, whereby an enriched mixture of volatile organic compounds is obtained on the permeate side of the diaphragm, which enriched mixture is returned to a storage tank, whilst depleted retentate is fed to a vent pipe of the tank. A similar system is also disclosed in German patent application, publication number DE 3806107.

The present invention is directed to a fuel dispensing system and method for maintaining a desired pressure within a fuel storage tank or tanks while minimizing or eliminating the amount or mass of pollutants discharged from the fuel storage tank or tanks.

According to a first aspect of the present invention there is provided a fuel dispensing system comprising: a fuel storage tank from which fuel is dispensed to a vessel and vapour recovery means for returning to the fuel storage tank vapours displaced from the vessel by the dispensed fuel, characterised in further comprising apparatus for reducing hydrocarbon emissions from the fuel storage tank, the apparatus comprising a chamber having: an inlet for receiving gases from the tank; a first outlet; a filter element comprising a membrane having the property of permitting hydrocarbon vapours to permeate therethrough; and a second outlet, partitioned from the inlet and first outlet by the membrane, for receiving vapours permeated through the membrane.

Employing the present invention reduces the quantity of pollutants emitted to the atmosphere by extracting through the membrane, preferably a fractionating membrane, a large proportion of the vapours that would otherwise be emitted to the atmosphere. However, because the membrane is located in the vent pipe from the tank it is both relatively simple to retrofit such a system to an existing installation, and also only a small proportion of vapour has to be filtered relative to that recovered by the vapour recovery system, and indeed it may only be necessary to occasionally vent the tank to atmosphere to release any cumulative imbalance between the quantity of fuel dispensed and quantity of air/vapour recovered.

Preferably the vent is provided with a controllable relief valve such as a solenoid valve to atmosphere. This is advantageously controlled in dependence on the pressure in the storage tank such that the valve is opened if the pressure exceeds a predetermined value. In this manner, minor variations in pressure in the tank can be tolerated without any requirement to vent to atmosphere, but if any larger increase in pressure occurs then this can be released by the valve.

Advantageously a pump is also provided to induce the vapour components to encounter the membrane within the above mentioned range. This encourages vapours to be absorbed through the membrane.

Advantageously the pump is located between the outlet and the tank and is controlled by a switch sensitive to the pressure in the tank, which switch turns the pump on when the pressure in the tank reaches a predetermined threshold, advantageously at or below the threshold at which the control valve opens.

In accordance with a second aspect of the invention there is provided a method for reducing hydrocarbon emissions from a fuel storage tank, the method comprising dispensing fuel to a vessel, retrieving vapours displaced from the vessel and returning them to the tank, the method being characterised in further comprising passing gases from the tank to an inlet of a chamber, the chamber having: a first outlet; a filter element comprising a membrane having the property of encouraging hydrocarbon vapours to permeate through the membrane; and a second outlet, partitioned from the inlet and first outlet by the membrane, such that hydrocarbons transmitted through the membrane are received by the second outlet.

One embodiment of the present invention will now be described, by way of example only, with reference to the accompanying drawings, in which:

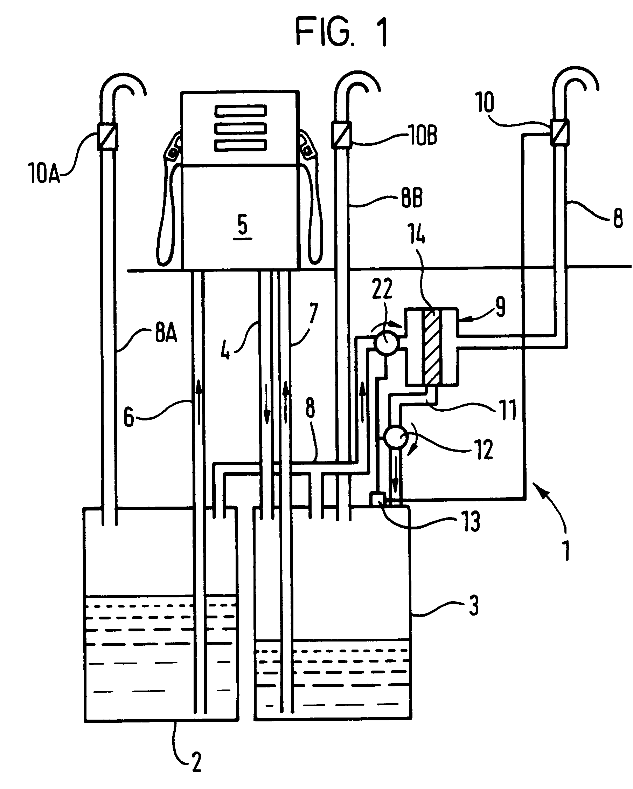

Figure 1 is a schematic view of a vent filter system in accordance with the present invention;
Figure 2A is an enlarged cross-sectional view of the chamber and the filter of Figure 1; and
Figure 2B is a cross-section along line I-I of Figure 2A.

Referring now to the drawings, in which like numerals are used throughout, the fuel storage tank vent system I is shown in conjunction with two conventional underground fuel storage tanks 2, 3 containing high and low octane fuel respectively. It will be understood that vent system 1 may be used with any number of storage tanks above or below ground.

Fuel tank 3 has a vapour return line 4 for receiving vapour recovered by a fuel dispenser 5 having means for collecting fuel vapours (not shown). The fuel tanks 2, 3 further include fuel delivery lines 6, 7 for conveying fuel to the dispenser 5. Vent line 8 is provided at the top of tanks 2, 3 and equalizes the pressure between them, permitting the return of all vapours to one tank 3 via return line 4. Additional return lines to additional tanks can be provided but are generally not needed.

Vent line 8 extends to atmosphere, via chamber 9 and control valve 10. A return line 11 connects the lower portion of chamber 9 and tank 3 via pump 12, the pump 12 and control valve 10 being controlled by tank pressure sensor 13.

In addition to vent line 8. each tank is also vented to atmosphere via vent lines 8A and 8B each having a respective pressure/vacuum release valve 10A and 10B which ensure no pressure or vacuum exists within the tank outside a predetermined range. Gases will in normal operation be vented through vent line 8 in preference to vent lines 8A or 8B, but any vacuum will be replenished by air being drawn in through lines 8A or 8B.

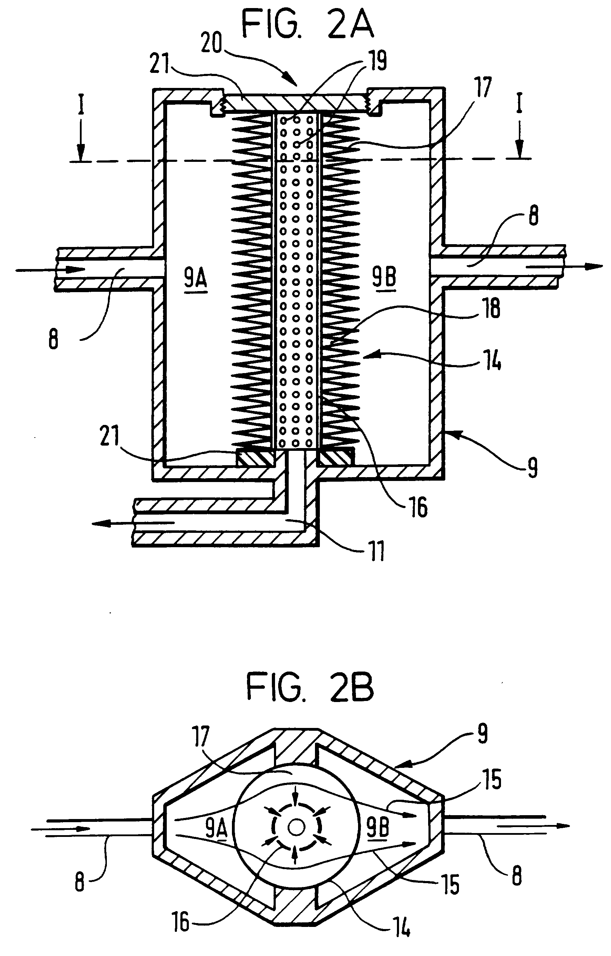

Referring now to Figures 2A and 2B, chamber 9 houses filter element 14 positioned such that it separates chamber 9 into two plenums 9A and 9B. Vapour and gases entering the chamber, from the storage tanks 2 and 3 along vent line 8, flow through the filter element 14 to valve 10, as indicated by arrows 15 in Figure 2B.

The filter 14 comprises a cylindrical core 16. Membrane 17 is configured as an outer cylinder coaxial with the core cylinder comprising a plurality of stacked and bound thin sheets, each adjacent pair shuts forming an envelope 18. Each envelope 18, formed between the membrane 17 and core 16, is connected to the space within the core 16 by holes 19 in the cylindrical core 16.

The filter element 14 is inserted through aperture 20 in the chamber 9, and is retained in place by threaded member 21, which member both seals the cavity and holds the cylindrical core 16 in contact with sealing ring 21, such that core 16 seals with return line 11.

Membrane 17 can be a fractionating membrane developed by GKSS-Forschungszentrum Geesthacht GmbH of Germany and described in "Operating Experiences with Membrane Systems in Gasoline Tank Farms", presented by K. Ohlrogge at the 1991 9th Annual Membrane Technology/Planning Conference in Newton, Massachusetts, October 4-6, 1991 or "Volatile Organic Compound Control Technology by Means of Membranes", presented by K. Ohlrugge at the 1993 11th Annual Membrane Technology/Separation Planning Conference in Newton, Massachusetts October 11-13, 1993. A property of membrane 17 is that it is permeable to selected pollutants including hydrocarbons such as petroleum vapour while it is relatively impermeable to air.

In operation, vent system 1 functions as follows. As fuel is dispensed via fuel dispenser 5, a given volume of liquid, V_{L}, is drained from either tank 2 or 3. Concurrently with the draining of liquid fuel, a given volume of fuel vapour, V_{V}, is forced into tank 3 through vapour return line 4 by a vapour pump (not shown). Typically, the ratio of V_{V} to V_{L} will be greater than 1:1, thus, the pressure within the tanks will have a tendency to become greater than the ambient atmospheric pressure. It is also possible that the ratio of V_{V} to V_{L} will be less than 1:1. This would result in tank pressures less than atmospheric.

Normally, valve 10 will remain closed. However, when the pressure in tanks 2, 3 reaches a given pressure, pressure transducer 13 causes pump 12 to operate. The actuation of pump 12 creates a vapour flow from tank 3, through vent line 8, through chamber 9, and return line 11 to tank 3. As the vapour flows through chamber 9, it encounters membrane 17. As the fuel vapour encounters membrane 17, vapours are encouraged to permeate through the membrane by the pressure gradient across the membrane, leaving "clean" air within plenum 9B. Shortly after operation of the pump commences, valve 10 opens releasing this "clean" air to atmosphere. The increased concentration of the returned vapours may encourage the vapour to condense within tank 3 until equilibrium is reached.

If the tank pressure drops below atmospheric pressure. then air is drawn in via pressure vacuum release valves 10A and 10B.

In certain applications it may be advantageous to incorporate a pump 22, also controlled by pressure sensor 13, to assist in drawing gases away from the tank.

Certain modifications and improvements will occur to those skilled in the art upon a reading of the foregoing description. It should be understood that all such modifications and improvements are properly within the scope of the following claims.

## Claims

1. A fuel dispensing system comprising: a fuel storage tank (3) from which fuel is dispensed to a vessel; and vapour recovery means for returning to the fuel storage tank vapours displaced from the vessel by the dispensed fuel, characterised in further comprising apparatus (1) for reducing hydrocarbon emissions from the fuel storage tank (3), the apparatus comprising a chamber (9) having:
an inlet for receiving gases and vapours from the tank (3);
a first outlet ;
a filter element (14) comprising a membrane (17) having the property of permitting hydrocarbon vapours to permeate therethrough; and
a second outlet (11), partitioned from the inlet and first outlet by the membrane (17), for receiving vapours permeated through the membrane (17).

2. A system as claimed in claim 1 wherein the membrane (17) is arranged in the filter element (14) such that gases flowing through the filter element flow across the surface of the membrane (17).

3. A system as claimed in claim 1 or 2 wherein the filter element (14) extends across a flow path (15) between the inlet and first outlet.

4. A system as claimed in claim 3 wherein the filter element (14) extends across the chamber (9) such that gases flowing from the inlet to the first outlet flow through the filter element (14).

5. A system as claimed in any preceding claim wherein the first outlet is vented towards atmosphere.

6. A system as claimed in claim 5 further comprising a controllable valve (10) connected between the first outlet and atmosphere.

7. A system as claimed in claim 6 further comprising a sensor (13) for determining the pressure in the tank (3) and opening the controllable valve if the pressure exceeds a predetermined threshold.

8. A system as claimed in any preceding claim wherein the second outlet (11) is connected to the tank (3) such that vapours permeating through the membrane are returned to the tank.

9. A system as claimed in claim 8 further comprising a pump (12) located between the second outlet (11) and the tank (3), which pump (12) in operation causes the pressure at the second outlet (11) to decrease relative to the pressure at the inlet inducing hydrocarbon vapours to encounter and permeate through the membrane (17).

10. A system as claimed in claim 9 further comprising a sensor (13) for detecting the pressure in the storage tank and causing the pump (12) to be actuated if the pressure exceeds a predetermined value.

11. A system as claimed in any preceding claim wherein the membrane (17) comprises a number of portions which absorb and transmit various components of hydrocarbon vapours.

12. A method for reducing hydrocarbon emissions from a fuel storage tank (3), the method comprising dispensing fuel to a vessel, retrieving vapours displaced from the vessel and returning them to the tank, the method being characterised in further comprising passing gases from the tank to an inlet of a chamber, the chamber having:
a first outlet;
a filter element comprising a membrane having the property of encouraging hydrocarbon vapours to permeate through the membrane; and
a second outlet, partitioned from the inlet and first outlet by the membrane, such that hydrocarbons transmitted through the membrane are received by the second outlet.

13. A method as claimed in claim 12 further comprising pumping hydrocarbons from the second outlet back to the tank such as to induce vapour to permeate through the membrane.

## Patentansprüche

1. Treibstoffabgabesystem mit: einem Treibstoffspeichertank (3), von dem Treibstoff an einen Behälter abgegeben wird; und einem Dampfrückgewinnungsmittel zum Rückführen von Dämpfen zu dem Treibstoffspeichertank, die aus dem Behälter durch den abgegebenen Treibstoff verdrängt werden, dadurch gekennzeichnet, daß es ferner ein Gerät (1) zum Reduzieren von Kohlenwasserstoffemissionen von dem Treibstoffspeichertank (3) umfaßt, wobei das Gerät eine Kammer (9) umfaßt mit:
einem Einlaß zum Aufnehemen von Gasen und Dämpfen von dem Tank (3);
einem ersten Auslaß;
einem Filterelement (14), das eine Membran (17) mit einer Eigenschaft besitzt, die ermöglicht, daß Kohlenwasserstoffdämpfe durch sie hindurchdringen; und einem zweiten Auslaß (11), der von dem Einlaß und dem ersten Auslaß durch die Membran (17) abgeteilt ist, um Dämpfe aufzunehmen, die durch die Membran (17) durchgedrungen sind.

2. System nach Anspruch 1, worin die Membran (17) in dem Filterelement (14) angeordnet ist, so daß Gase, die durch das Filterelement strömen, über die Oberfläche der Membran (17) strömen.

3. System nach Anspruch 1 oder 2, worin sich das Filterelement (14) über einen Strömungspfad (15) zwischen dem Einlaß und dem ersten Auslaß erstreckt.

4. System nach Anspruch 3, worin sich das Filterelement (14) über die Kammer (9) erstreckt, so daß Gase, die von dem Einlaß zu dem ersten Auslaß strömen, durch das Filterelement (14) strömen.

5. System nach einem der vorangegangenen Ansprüche, worin der erste Auslaß an die Atmosphäre entlüftet wird.

6. System nach Anspruch 5, ferner mit einem steuerbaren Ventil (10), das zwischen dem ersten Auslaß und der Atmosphäre angeschlossen ist.

7. System nach Anspruch 6, ferner mit einem Sensor (13) zum Bestimmen des Drucks in dem Tank (3) und zum Öffnen des steuerbaren Ventils, wenn der Druck eine vorbestimmte Schwelle überschreitet.

8. System nach einem der vorangegangenen Ansprüche, worin der zweite Auslaß (11) mit dem Tank (3) so verbunden ist, daß Dämpfe, die durch die Membran hindurchdringen, in den Tank zurückgeführt werden.

9. System nach Anspruch 8, ferner mit einer Pumpe (12), die zwischen dem zweiten Auslaß (11) und dem Tank (3) angeordnet ist, wobei die Pumpe (12) im Betrieb bewirkt, daß der Druck an dem zweiten Auslaß (11) relativ zu dem Druck an dem Einlaß abnimmt, wodurch veranlaßt wird, daß Kohlenwasserstoffdämpfe auf die Membran (17) auftreffen und durch sie hindurchdringen.

10. System nach Anspruch 9, ferner mit einem Sensor (13), um den Druck in dem Speichertank zu detektieren und um zu veranlassen, daß die Pumpe (12) betätigt wird, wenn der Druck einen vorbestimmten Wert überschreitet.

11. System nach einem der vorangegangenen Ansprüche, worin die Membran (17) eine Anzahl von Abschnitten umfaßt, die verschiedene Komponenten von Kohlenwasserstoffdämpfen absorbieren und übertragen.

12. Verfahren zum Reduzieren von Kohlenwasserstoffemissionen von einem Treibstoffspeichertank (3), wobei das Verfahren umfaßt, daß Treibstoff an einen Behälter abgegeben wird, aus dem Behälter verdrängte Dämpfe wiedergewonnen werden, und daß diese in den Tank zurückgeführt werden, wobei das Verfahren dadurch gekennzeichnet ist, daß es ferner umfaßt, daß Gase von dem Tank an einen Einlaß einer Kammer gelangen, wobei die Kammer besitzt:
einen ersten Auslaß;
ein Filterelement mit einer Membran, welche die Eigenschaft besitzt, daß das Durchdringen von Kohlenwasserstoffdämpfen durch die Membran unterstützt wird; und
einen zweiten Auslaß, der von dem Einlaß und dem ersten Auslaß durch die Membran abgeteilt ist, so daß Kohlenwasserstoffe, die durch die Membran übertragen werden, von dem zweiten Auslaß aufgenommen werden.

13. Verfahren nach Anspruch 12, ferner umfassend ein Zurückpumpen von Kohlenwasserstoffen von dem zweiten Auslaß in den Tank, um so zu veranlassen, daß Dampf durch die Membran hindurchdringt.

## Revendications

1. Ensemble de distribution de carburant comprenant une cuve (3) de stockage de carburant à partir de laquelle le carburant est distribué vers un récipient, et un dispositif de récupération de vapeurs destiné à renvoyer, à la cuve de stockage de carburant, les vapeurs déplacées du récipient par le carburant distribué, caractérisé en ce qu'il comprend en outre un appareil (1) destiné à réduire les émissions d'hydrocarbures de la cuve (3) de stockage de carburant, l'appareil comportant une chambre (9) qui possède :
une entrée destinée à recevoir des gaz et des vapeurs de la cuve (3),
une première sortie,
un élément de filtration (14) comprenant une membrane (17) ayant la propriété de permettre la traversée des vapeurs d'hydrocarbures, et
une seconde sortie (11) séparée de l'entrée et de la première sortie par la membrane (17) et destinée à recevoir les vapeurs qui ont traversé la membrane (17).

2. Ensemble selon la revendication 1, dans lequel la membrane (17) est placée dans l'élément de filtration (14) afin que les gaz circulant à travers l'élément de filtration s'écoulent à la surface de la membrane (17).

3. Ensemble selon la revendication 1 ou 2, dans lequel l'élément de filtration (14) s'étend transversalement au trajet de circulation (15) compris entre l'entrée et la première sortie.

4. Ensemble selon la revendication 3, dans lequel l'élément de filtration (14) est disposé dans la chambre (9) transversalement afin que les gaz s'écoulant de l'entrée vers la première sortie s'écoulent dans l'élément de filtration (14).

5. Ensemble selon l'une quelconque des revendications précédentes, dans lequel la première sortie est ventilée vers l'atmosphère.

6. Ensemble selon la revendication 5, comprenant en outre une soupape réglable (10) raccordée entre la première sortie et l'atmosphère.

7. Ensemble selon la revendication 6, comprenant en outre un capteur (13) destiné à déterminer la pression dans la cuve (3) et à ouvrir la soupape réglable lorsque la pression dépasse une valeur prédéterminée de seuil.

8. Ensemble selon l'une quelconque des revendications précédentes, dans lequel la seconde sortie (11) est raccordée à la cuve (3) afin que les vapeurs qui traversent la membrane soient renvoyées vers la cuve.

9. Ensemble selon la revendication 8, comprenant en outre une pompe (12) placée entre la seconde sortie (11) et la cuve (3), la pompe (12), pendant le fonctionnement, provoquant une réduction de la pression à la seconde sortie (11) par rapport à la pression à l'entrée et provoquant la rencontre de la membrane (17) par les vapeurs d'hydrocarbures et leur traversée de la membrane.

10. Ensemble selon la revendication 9, comprenant en outre un capteur (13) destiné à détecter la pression dans la cuve de stockage et à provoquer la commande de la pompe (12) lorsque la pression dépasse une valeur prédéterminée.

11. Ensemble selon l'une quelconque des revendications précédentes dans laquelle la membrane (17) comprend un certain nombre de parties qui absorbent et transmettent divers composés des vapeurs d'hydrocarbures.

12. Procédé de réduction des émissions d'hydrocarbures d'une cuve (3) de stockage de carburant, le procédé comprenant la distribution du carburant à un récipient, la récupération de vapeurs déplacées à partir du récipient et leur renvoi dans la cuve, le procédé étant caractérisé en ce qu'il comporte en outre la circulation de gaz de la cuve à une entrée d'une chambre, la chambre comprenant :
une première sortie,
un élément de filtration comprenant une membrane ayant la propriété d'encourager la traversée de la membrane par les vapeurs d'hydrocarbures, et
une seconde sortie séparée de l'entrée et de la première sortie par la membrane afin que les hydrocarbures transmis par la membrane soient reçus par la seconde sortie.

13. Procédé selon la revendication 12, comprenant en outre le pompage d'hydrocarbures de la seconde sortie vers la cuve afin que les vapeurs aient tendance à traverser la membrane.
